(19) Europäisches Patentamt
European Patent Office
Office européen des brevets

(11) **EP 3 808 525 A1**

(12) **EUROPEAN PATENT APPLICATION**

(43) Date of publication:
21.04.2021 Bulletin 2021/16

(51) Int Cl.:
***B29C 44/08*** (2006.01)  ***C08J 9/00*** (2006.01)
***B29K 105/00*** (2006.01)

(21) Application number: **19203079.9**

(22) Date of filing: **14.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
• **VAN ERP, Tim**
**4612 PX Bergen op Zoom (NL)**
• **YANEV, Angel**
**6160 AH Geleen (NL)**
• **MERCX, Frans**
**4612 PX Bergen op Zoom (NL)**

(74) Representative: **Elzaburu S.L.P.**
**Miguel Angel 21, 2nd floor**
**28010 Madrid (ES)**

(54) **IMPROVED THROUGH-PLANE THERMAL CONDUCTIVITY USING FOAM INJECTION MOLDING WITH CORE-BACK TECHNOLOGY**

(57) In various aspects, the disclosure relates to a method of forming a molded article (406) comprising: combining, to form a blend, a polymer base resin and a thermally conductive filler; feeding the blend to a mold cavity (408) of a suitable molding apparatus (400), wherein the mold cavity (408) has a mold portion (404) that may be retracted in a through-plane direction; foaming the blend to allow a pressure drop; and retracting the mold portion (404) in the through-plane direction to provide the molded article (406).

EP 3 808 525 A1

**Description**

TECHNICAL FIELD

The disclosure concerns foamed and filled thermoplastic compositions exhibiting improved thermal conductivity.

BACKGROUND

The development of improved thermoplastic compositions, such as reinforced or filled compositions, with robust physical and mechanical properties presents significant technical challenges. Establishing the appropriate balance of components and processing conditions for a desired application of thermally conductive plastic materials is explored herein. Thermally conductive plastic materials (or thermally conductive thermoplastics) typically include a polymer resin matrix with conductive fillers (such as beads, fibers, or platelets, etc.). To achieve high thermal conductivity anisotropic fillers are preferred. Anisotropic fillers may describe fillers that exhibit a particular physical property or behavior when observed or measured in a certain orientation or direction. The use of such anisotropic fillers however inherently may lead to anisotropic thermal conductivity upon processing of the resulting composition. Moreover, this anisotropic thermal conductivity yields high in-plane and low through-plane conductivity. Values for in-plane and through-plane thermal conductivity may determine whether a given thermoplastic composition is more suitable or less suitable for certain applications, for example, as a heat exchanger. The present disclosure addresses these considerations as well as others in the art.

SUMMARY

In various aspects, the present disclosure relates to methods of forming a molded article. The method may comprise combining to form a blend, a polymer base resin and a thermally conductive filler. The blend may be fed to a mold cavity of an injection molding machine, wherein the mold cavity has a mold portion that may be retracted in a through-plane direction. The molded blend may be foamed. The mold portion may be retracted in the through-plane direction to provide the molded article. The molded article may exhibit improved or increased through-plane thermal conductivity when compared to a substantially identical reference composition that has not been subjected to both a foaming process and a mold retraction process.

In further aspects, the present disclosure relates to a method comprising: combining to form a blend, a polymer base resin and a thermally conductive filler, injection molding the blend to form a molded blend; foaming the molded blend; and performing a mold opening process to form a larger mold cavity to provide a foamed article.

In another aspect, the disclosure concerns an article prepared according to the methods of forming a thermoplastic composition as disclosed herein.

BRIEF DESCRIPTION OF THE DRAWINGS

The following is a brief description of the drawings wherein like elements are numbered alike and which are exemplary of the various embodiments described herein. In the drawings:

FIG. 1 shows an example method for a core-back process of injection molding useful when applied to the compositions disclosed herein.
FIG. 2 shows an injection molding barrel/screw constructed according to the principles of the disclosure.
FIG. 3A shows a schematic representation of reorientation of conductive fillers by foam expansion or cell growth where thermally conductive filler are distributed throughout a polymer resin matrix; FIG. 3B shows a cell of foamed gas; and FIG. 3C shows cell continuing to increase in size.
FIG. 4 shows a suitable mold core-back tool configured to receive an injection polymer melt.
FIG. 5A shows a schematic diagram of mold filling; FIG. 5B shows cell nucleation and cell growth; and FIG. 5C shows opening of a mold portion so that cells become elongated.
FIG. 6 presents a detailed example of forming a foamed, molded part according to the present disclosure.
FIG. 7 shows thermal conductivity (TC) results for two materials processed according to the present disclosure.

DETAILED DESCRIPTION

Thermally conductive compositions generally comprise a polymer resin matrix with conductive fillers dispersed therein. To achieve high thermal conductivity in the through-plane direction (i.e., through-plane thermal conductivity, which is useful for heat exchangers) a very highly filled systems is desired. A highly filled polymer resin system may have upwards of 50 weight percent filler based on the total weight of the resin system. Additionally, to achieve high thermal conductivity, anisotropic fillers are conventionally preferred. Anisotropic fillers however may lead to anisotropic thermal conductivity when the composition is subjected to processing such as during injection molding or extrusion. More specifically, the use of such fillers inherently causes the thermal conductivity to display anisotropy such that the highest thermal conductive values are observed in the direction of processing flow direction and substantially lower thermal conductivity in the through-plane direction. Thus, anisotropic fillers may yield high in-plane thermal conductivity, through-plane conductivity may be lower. Currently, the highest through-plane conductivity of 1.0-2.0 W/mK is reported in very highly filled systems (greater than 50 wt.% filler loading). A 3-5 W/mK through-plane conductivity has not been reached by state-of-the-art material compounds.

The present disclosure establishes that by applying an advanced processing method, the through-plane thermal conductivity of a molded article may be improved nearly three-fold.

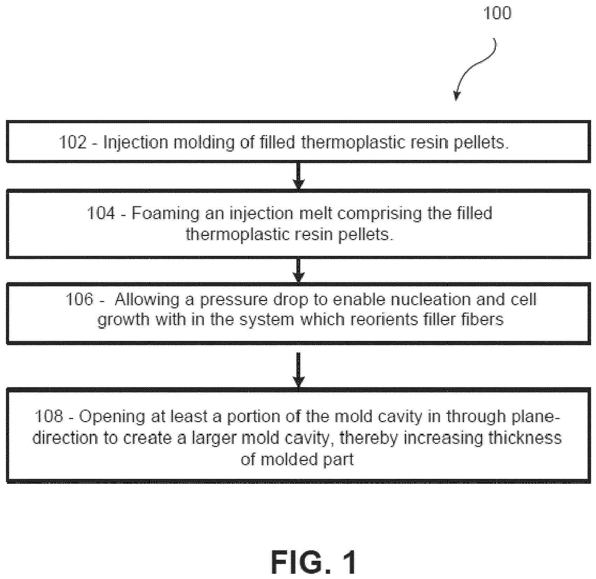

In various aspects, the filled thermoplastic composition is subjected to a foaming injection molding process. As shown in FIG. 1, the method may comprise filled thermoplastic resin pellets being injection molded at 102. A foaming agent may be co-injected in the cavity at 104 to enable nucleation and cell growth of the foamed composition. Foaming is followed by mold opening to increase sample thickness 108. The process may be referred to as core-back, breathing, and decompression. The combination of foaming agents with mold-opening during filling of the product enables microstructural changes. Specifically, thermally conductive fibers comprising the filler may be re-oriented or re-distributed in the direction of the sample thickness, potentially create an enhanced filler network. Such a re-orientation and/or enhanced network may improve the through-plane thermal conductivity of the molded article.

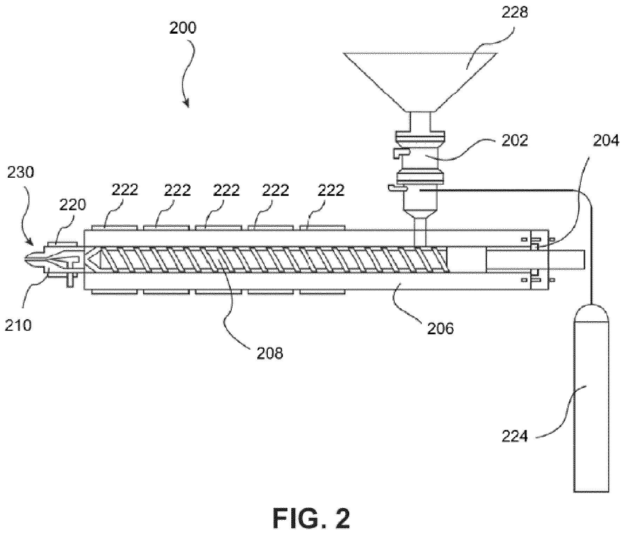

In an aspect, the disclosed method comprises combining a polymer base resin and a thermally conductive filler to form a blend and introducing the blend to a molding process. The molding process may comprise an injection molding process. According to various aspects of the present disclosure, a filled thermoplastic resin may be subjected to a molding process, such as injection molding, to form the desired article. For illustrative purposes, certain injection molding and foaming processes are presented herein. FIG. 2 shows an injection molding barrel/screw constructed according to the principles of the disclosure.

As shown in FIG. 2, an injection molding barrel/screw 200 may include a hopper 228. Pellets of fiber reinforced thermoplastics may be supplied by the hopper 228 to the injection molding barrel/screw 200 together with a gas (such as a blowing agent) from a gas source 224. During plasticizing (or melting) of the pellets in the injection molding barrel/screw 200, the gas may dissolve gradually in the melt via a desired foaming process.

The injection molding barrel/screw 200 may include a cylinder 206 maintaining a screw 208. The screw 208 may further include a motor or the like (not shown) for moving the screw 208 to advance the material. The injection molding barrel/screw 200 may further include a seal 204, an airlock 202 and a shutoff valve 210 configured to maintain gas pressure within the cylinder 206. Other constructions associated with the injection molding barrel/screw 200 are contemplated to maintain gas pressure within the cylinder 206 as well.

According to various aspects of the present disclosure, a controller may be useful for operation of the injection molding machine. For example, the controller may receive sensor outputs from a temperature or pressure sensor from any part of the injection molding apparatus described herein. The controller may also include a processor and an input/output port that is configured to receive signals from any suitably attached electronic device and transmit the signals to process. These signals may be from the temperature and/or pressure sensors.

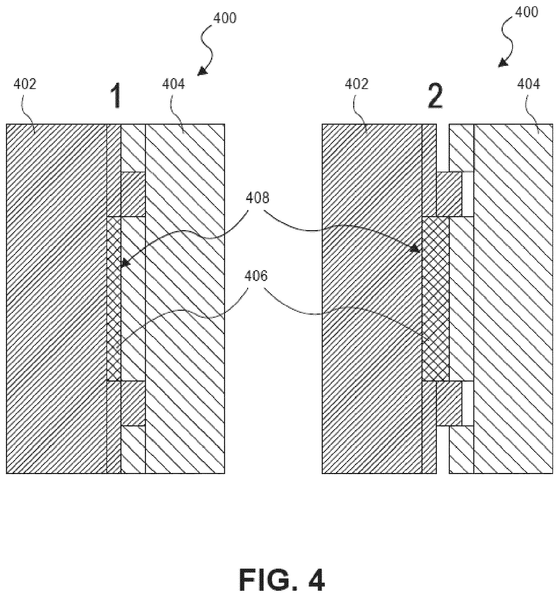

In various examples, a controller and input/output I/O port may be configured to control operation of the core-back tool (400, referring to FIG. 4) and receive signals from the core-back tool 400. These signal includes signals from a temperature sensor sensing temperature from any part of the core-back tool 400 and associated system, a pressure sensor sensing pressure from a part of the core-back tool 400 and associated system, a position sensor sensing position of a part of the core-back tool 400 and associated system, and the like. The controller may control operation of the core-back tool 400 including the configurations.

During the plasticizing of the polymer, foaming of the polymer melt may be enabled via introduction of an inert gas into the melt. Foaming may be achieved according to a number of methods well known in the art. In some examples, foaming may proceed using a physical blowing agent such as carbon dioxide, nitrogen, or isobutane. A further useful example of a physical blowing agent may comprise MuCell™. In further examples, foaming may proceed using a chemical blowing agent such as decomposed generating carbon dioxide. Physical foaming may proceed where the polymer is melted and a SCF is injected into the melt at a high pressure (for example, about -200 bar). The SCF may dissolve into the polymer melt in a single phase. With chemical foaming, a chemical blowing agent may be combined with the polymer during the injection molding process. As the temperature increases, the chemical blowing agent decomposes and releases carbon dioxide gas into the polymer melt.

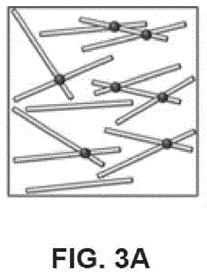

After injection of the filled thermoplastic melt with the desired foamed gas, a pressure drop may occur in the injection molding system. Such a pressure drop allows for nucleation and cell growth within the polymer resin melt. FIGS. 3A-3C presents a schematic representation of reorientation of conductive fillers by the foam expansion or cell growth. See, A. Ameli et al., CARBON71(2014) 206 - 217.

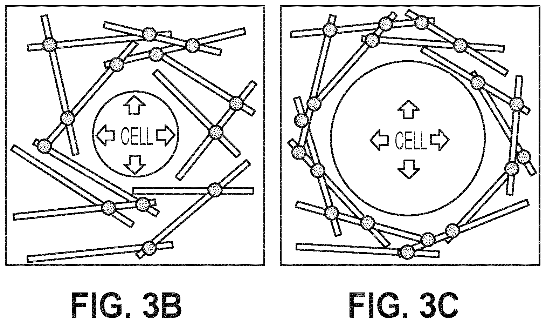

As shown in FIG. 3A, filaments of thermally conductive filler are distributed throughout a polymer resin matrix. In FIG. 3B, a cell comprised of foamed gas has formed within the polymer resin matrix and the filaments of thermally conductive filler are shown dispersed thereabout. In FIG. 3C, the cell continues to increase. The cell growth and nucleation generate an internal force within the polymer melt causing a reorientation of the thermally conductive fillers. The reorientation may proceed in such way to promote a 3D network of the fillers.

FIG. 4 presents a suitable mold core-back tool configured to receive the foamed, injection polymer melt according to the principles of present disclosure. In particular, FIG. 4 shows a mold core-back tool 400 in a first position 1 and a second position 2. Core-back, also known as breathing or decompression molding, may refer to a controlled opening of the core-back tool 400 from its initial thickness to the desired end thickness. The core-back tool 400 may include a first mold portion 402 and a second mold portion 404. Additional mold components associated with the core-back tool 400 may be utilized as well.

During the molding process that is described in greater detail herein, the first mold portion 402 and the second mold portion 404 of the core-back tool 400 may be in the first position 1. A part to be molded 406 may be introduced to a mold cavity 408 that is sized based on the first configuration 1. During the molding process, the first mold component 402 and the second mold component 404 of the core-back tool 400 may be reconfigured to the second position 2. The second position may correspond to a retracting motion of the first mold portion or a "mold opening" as referred to herein. Thereafter, the part to be molded 406 may be subjected to a mold cavity 408 that is sized based on the second configuration 2. For example, the mold cavity 408 may be larger in one dimension in the second configuration 2 in comparison to the first configuration 1. In one aspect, the mold cavity 408 may be larger in two dimensions in the second configuration 2 in comparison to the first configuration 1. In one aspect, the mold cavity 408 may be larger in three dimensions in the second configuration 2 in comparison to the first configuration 1. In some examples, mold opening may proceed to increase the size of the mold cavity at least 10 %, 20 %, 30 %, 40 %, 50 %, 60 %, or 70 % by volume or an increase from about 5 % to about 200 % by volume. In a specific example, mold opening may proceed from 3 mm to a thickness of 5 mm, corresponding to a core-back of 67%. An improvement in through plane thermal conductivity may be observed where the size of the mold cavity is increased by at least 50 % by volume.

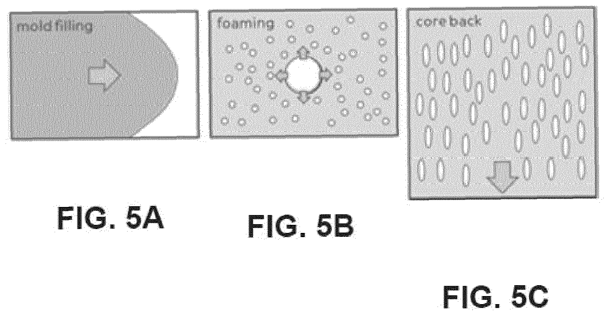

Accordingly, in various examples, upon reaching a certain volume fill for the mold cavity (>85%), a mold portion is retracted to create a larger mold cavity, resulting in an increase of the thickness of the molded part within the cavity. As an example, the mold opening from the first position 1 to the second position 2 as described herein may proceed in a through-plane direction such that a relative spacing between the first mold portion 402 and the second mold portion 404 has increased. Mold-opening enables expansion of the foam therein which facilitates preferred orientation of conductive fillers in the through-plane direction. FIGS. 5A-5C presents a schematic diagram that illustrates the mold filling, foaming, and core back processes. In FIG. 5A, the polymer melt enters and fills a volume of the mold, which is in a direction may be referred to as an "in-plane" direction. During foaming, as described above, nucleation and cell growth occur in FIG. 5B. With the core-back, as a mold portion is opened in a through-plane direction, gaseous cells may become elongated in FIG. 5C. Moreover, filaments of fiber filler are reoriented.

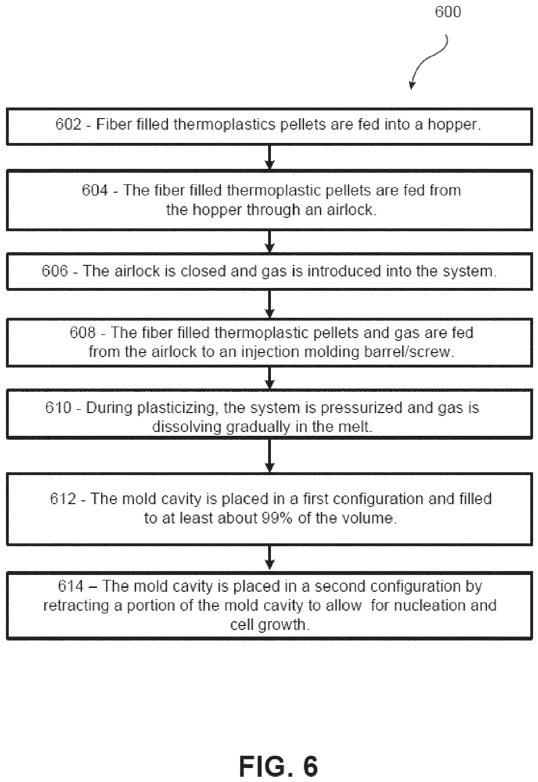

FIG. 6 details an example of a process of constructing a foamed, molded part according to the principles of the disclosure. In particular, FIG. 6 shows a process 600 for producing molded articles exhibiting improved through-plane thermal conductivity. In step 602, fiber filled thermoplastics pellets are fed into a hopper 228 (referring to FIG. 2). Thereafter, in step 604, the fiber reinforced thermoplastics pellets are fed from the hopper 228 through an airlock 202. As shown in step 606, the airlock 202 may be closed.

As described in step 608, the fiber reinforced thermoplastics pellets are fed from the airlock 202 to the injection molding barrel/screw 200 together with a suitable gas. As described in step 610, during plasticizing in the injection molding barrel/screw 200, the gas may dissolve gradually in the melt. Additionally, the disclosed process may further benefit from having no and/or limited abrasive mixing elements in the injection molding barrel/screw 200 to further reduce fiber breakage.

In the process 600, the injection molding barrel/screw 200 (or other portion of a plasticizing unit of the injection molding machine) may be pressurized with the gaseous blowing agent at step 610. For example, the pressurizing is performed in more than 50%, more than 70%, or more than 90% to 100%, of the plasticizing unit. To prevent the loss of the blowing agent at the end of the screw, a seal 204 may be arranged between the screw 208 and the cylinder 206. The injection molding barrel/screw 200 and/or plasticizing unit itself may be sealed with the airlock 202 that is mounted between the injection molding barrel/screw 200 and the hopper 228. The injection molding barrel/screw 200 and/or plasticizing unit may be equipped with a shutoff valve 210 and a position control for the screw 208 to keep the blowing-agent-loaded melt under pressure until it is injected into the core-back tool 400. The injection molding barrel/screw 200 may be implemented as a 3-zone screw without any abrasive elements for dissolving the gas into the melt.

At step 612, the melt having dissolved gas is introduced to the mold cavity in a first configuration and melt is allowed to fill the mold cavity to at >85 % of its volume. Thus, at this step, the mold cavity 408 (FIG. 4) of the mold portions 402, 404 may be in the first configuration 1 and may be filled up to >85% of volume. In one aspect, a packing pressure is applied. This may limit the dissolved gas from expanding the part 406, thus limiting the formation of foam.

In one aspect, no packing pressure is applied.

As described in step 614, the mold cavity 408 of the core-back tool 400 may be resized and the mold opened by placing the mold in the second configuration 2 by retracting a mold portion in the through plane direction. While in the second configuration 2, the dissolved gas within the injected material may be allowed to at least partially expand to form foam within the part 406. The result is a molded, foamed part exhibiting improved through-plane thermal conductivity when compared to a part formed via conventional injection molding and foaming processes.

The disclosed processes may further comprise additional parameters to facilitate molding and/or foaming. For example, the further treatment may include heat-cool technology. Heat-cool technology may be applied to facilitate high mold temperature during filling and foam expansion as described herein. Via heat-cool technology, a higher temperature profile may promote a lower melt viscosity of the polymer melt. The lower melt viscosity may facilitate the foam expansion process and/or presents premature freezing or solidification of the polymer melt. An example of a useful heat-cool technology may comprise a water temperature controller that can both heat and cool an injection mold within a single molding cycle.

In an aspect, the polymer composition can include a polymer base resin. In various aspects, the polymer base resin can include a thermoplastic resin. The thermoplastic resin can include polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LPC), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof. The thermoplastic resin can also include thermoplastic elastomers such as polyamide and polyester based elastomers. The base substrate can also include blends and/or other types of combination of resins described above.

In an aspect, the polymer base resin may be combined with a thermally conductive filler. Generally, the thermally conductive filler is anisotropic. Or in further examples, the thermally conductive filler has an aspect ratio that is not 1:1 such that the filler may be oriented in a particular direction. The thermally conductive filler may thus have a particular shape such that the filler may be oriented in a particular direction. For example, the thermally conductive filler may include blocks, flakes, fibers, whisker, needle-like shapes or a combination thereof. The thermally conductive filler may have any dimensionality, including ID, 2D and 3D geometries.

Examples of thermally conductive filler may include white thermally conductive fillers, which include, but are not limited to, ZnS (zinc sulfide), CaO (calcium oxide), MgO (magnesium oxide), ZnO (zinc oxide), or $TiO_2$ (titanium dioxide), tin dioxide, chromium Oxide, $CaCO_3$ (calcium carbonate), mica, BaO (barium oxide), $BaSO_4$ (barium sulfate), $CaSO_4$ (calcium sulfate), $CaSiO_3$ (wollastonite), $ZrO_2$ (Zirconium oxide), $SiO_2$ (Silicon oxide), Glass fiber, $MgO•xAl_2O_3$ (magnesium aluminate), $CaMg(CO_3)_2$ (dolomite), coated graphite, $Mg(OH)_2$ (magnesium hydroxide), $H_2Mg_3(SiO_3)_4$ (talc), $\gamma$-AlO(OH) (boehmite), $\alpha$-AlO(OH) (diaspore), $Al(OH)_3$ (Gibbsite), clay; AlN (aluminum nitride), $Al_4C_3$ (aluminum carbide), $Al_2O_3$ (aluminum oxide), BN (boron nitride), AlON (aluminum oxynitride), $MgSiN_2$ (magnesium silicon nitride), SiC (silicon carbide), $Si_3N_4$ (silicon nitride), tungsten oxide, aluminum phosphide, beryllium oxide, boron phosphide, cadmium sulfide, gallium nitride, zinc silicate, and $WO_3$, dark color thermally conductive fillers with certain white coating, which include graphite, expanded graphite, expandable graphite, graphene, carbon fiber, CNT (carbon nano-tube); or a combination thereof. In specific examples, the thermally conductive filler may be graphite. In some aspects, the thermally conductive filler may have a thermal conductivity of greater than 5 watts per meter kelvin (W/m*K).

In some aspects, the composition can include from about 1 wt. % to about 70 wt. % of a thermally conductive filler. In further aspects the composition may include from about 20 wt. % to about 70 wt. % of a thermally conductive filler, or from about 35 wt. % to about 70 wt. % of a thermally conductive filler, or from about 25 wt. % to about 50 wt. % of a thermally conductive filler.

## PROPERTIES AND ARTICLES

Conventionally, the thermal conductivity of engineering plastics is improved using (conductive) fillers in form of platelets or fibers. The present disclosure facilitates re-orientation of the conductive fillers in a through-plane direction which facilitates higher through-plane conductivities, greater than 3 W/mK, potentially with filler content in range of about 25 wt. % to about 70 wt. % thermally conductive filler loading. This performance is particularly useful in the area of heat exchangers.

In certain aspects, the disclosed method may provide thermoplastic molded articles that have a through-plane thermal conductivity of >3 W/mK when tested in accordance with ISO 22007-2.

The advantageous physical characteristics of the thermoplastic compositions disclosed herein can make them appropriate for an array of uses. For example, the disclosed processes and articles formed therefrom may be useful in any application where filler orientation in the direction of sample thickness is required. This may include, for example, through-plane electrical conductivity applications.

Heat exchangers (HX) represent a class of materials that are suitable for exploitation of thermally conductive articles formed according to the disclosed processes. The disclosed articles having improved through-plane thermal conductivity may be useful in plate-plate HX as well as shell-tube HX or any other type of HX that is used to transfer heat through a wall distinguishing two given media (such as, for example, fluids and/or gasses). These HX are applicable in systems where (sea) water is used as a first medium (or any other fluid), as in the fields of ocean thermal energy conversion (OTEC) technology, district cooling, ship engine cooling , desalination processes, heat recovery in municipal sewer systems, as well as HX in industrial plants. Conventionally, stainless steel or even titanium HX are used in these applications. Those HX however may suffer from corrosion. Fully thermoplastic HXs, which are a suitable application for the disclosed articles formed herein, may provide a minimal threshold of greater than 3 W/mK through-plane thermal conductivity which is required for effective heat transfer.

EXAMPLES

Detailed embodiments of the present disclosure are disclosed herein; it is to be understood that the disclosed embodiments are merely exemplary of the disclosure that may be embodied in various forms. Therefore, specific structural and functional details disclosed herein are not to be interpreted as limits, but merely as a basis for teaching one skilled in the art to employ the present disclosure. The following examples are provided to illustrate the compositions, processes, and properties of the present disclosure. The examples are merely illustrative and are not intended to limit the disclosure to the materials, conditions, or process parameters set forth therein.

*General Materials and Methods*

The compositions as set forth in the Examples below were prepared from the components presented in Table 1.

Table 1: Components of the thermoplastic compositions and thermal conductivity.

| Grade | Composition | Density [g/cm$^3$] | T.C. in-plane [W/mK] (ISO 22007-2) | T.C. through-plane [W/mK] (ISO 22007-2) |
|---|---|---|---|---|
| SAMPLE (A): LNP KONDUIT PX10323 | 10 wt.% glass fiber (D$_{50}$, 10 micron) 50 wt.% graphite (D$_{50}$, 100 micron, A.R. 20-30) PA6 (intrinsic viscosity, IV = 2.4) some stabilizers | 1.61 | 18.0 | 1.5 |
| SAMPLE (B): LNP KONDUIT PX13012 | 50 wt.% Mg(OH)$_2$ (D$_{50}$, 1.4 - 2.0micron) 12 wt.% graphite (D50, about 100 micron, A.R. 20 -30) PA6 (IV = 2.4) some stabilizers | 1.68 | 5.5 | 1.2 |

Formulations were prepared by extruding the pre-blended components using a twin extruder. The extruded components were injected into a mold cavity to 99% volume full. After that, packing pressure (phase) is not applied, since gas expansion would compensate for volumetric shrinkage of the material and pack the part from the inside.

The composition was melt-kneaded and extruded. The extrudate was cooled using a water bath prior to pelletizing. Components were compounded using a 37 mm Toshiba TEM-37BS Twin Screw Extruder co-rotating twin screw extruder with the compounding settings set forth in Table 2.

Table 2. Injection molding settings

| Zone 1 | 265 | °C |
|---|---|---|
| Zone 2 | 275 | °C |

(continued)

| Zone 1 | 265 | °C |
|---|---|---|
| Zone 3 | 285 | °C |
| Zone 4 | 295 | °C |
| Nozzle zone | 295 | °C |
| Hot runner | 295 | °C |
| Mold | 130 | °C |

Table 3 summarizes the parameters for the injection molding and/or foaming. Trial 1 includes molded articles of formulations (A) and (B) formed via injection molding with MuCell™ (chemical) foaming while Trial 2 includes molded articles of formulations (A) and (B) formed via injection molding with carbon dioxide (physical) foaming. The core-back process (or mold opening) included an opening of from 3 mm to 5 mm. For Trial 1, chemical foaming agent MuCell™ was used and a weight reduction of 3.5 % was achieved. A volume of 0.3% nitrogen gas $N_2$ was used in the foaming process with MuCell™ injection unit For Trail 2, chemical blowing agent (CBAClariant Hydrocerol™ ITP 825 was used. Foaming was performed with using 3% of the selected CBA with standard injection unit.

Table 3. Foaming Coreback Process trials.

| Trial #1 with Samples (A) and (B) |
|---|
| 2.1. Injection molding (no foaming, no core-back. |
| 2.2. Injection molding w/ MuCell $N_2$ foaming. |
| 2.3. Injection molding w/ MuCell N2 foaming + coreback 67% (3→5mm). |
| **Trial #2 with Samples (A) and (B)** |
| 2.4. Injection molding (no foaming, no core-back. |
| 2.5. Injection molding w/ $CO_2$ foaming. |
| 2.6. Injection molding w/ CO2 foaming + coreback 67% (3→5mm). |

Like the foaming injection molding process, only after the cavity filling, normally but not limited to around 99% of the volume, the mold is opened to facilitate further cell expansion in the direction of mold opening. Plaques of 3mm nominal thickness. Core-back of 67%, i.e. mold opening from 3 to 5mm.

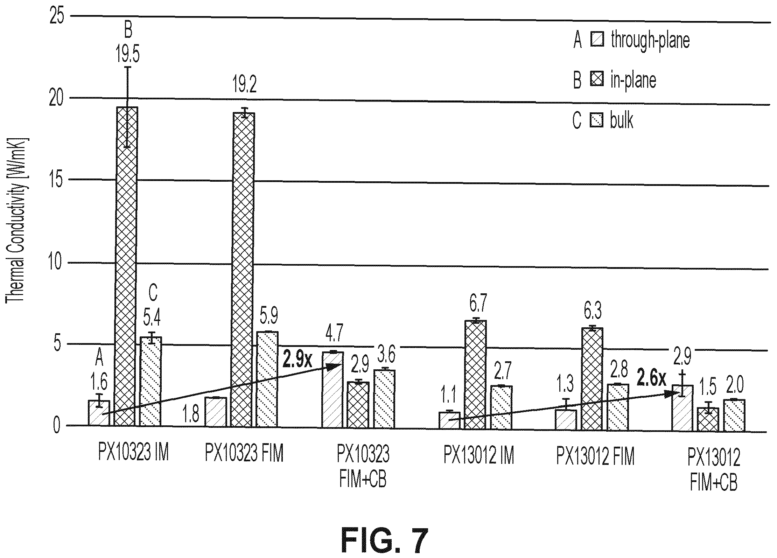

Thermal conductivity was performed for the processes of each formulation of Trial 1 and 2. FIG. 7 shows thermal conductivity (TC) results for 2 materials (Formulation (A) PX10323 and Formulation (B) PX13012). TC values of standard injection molded parts were as expected: high in-plane TC and low through-plane TC. Using only foaming injection molding a 10-20% increase in through-plane TC is achieved at the expense of in-plane TC. However, when using foaming injection molding combined with core back technology, the through-plane TC is 2.5-3x increased compared to standard injection molding, leading to TC values of 2.9 and 4.7 W/mK for PX13012 and PX10323 respectively. Note, using foaming injection molding with core back technology, the bulk thermal conductivity (that is, the square root of product of in-plane and through-plane TC) decreased compared to standard injection molding.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

In various aspects, the present invention pertains to and includes at least the following aspects.

Aspect 1. A method of forming a molded article comprising: combining, to form a blend, a polymer base resin and a thermally conductive filler; feeding the blend to a mold cavity of an injection molding machine, wherein the mold cavity has a mold portion that may be retracted in a through-plane direction; and retracting the mold portion in the through-plane direction to allow the foaming process to increase an initial part thickness and to provide the molded article.

Aspect 2. The method of claim 1, wherein the feeding occurs to fill the mold cavity at least 85% based on total mold cavity volume.

Aspect 3. The method of claim 1, wherein the foaming is via a physical and/or chemical process.

Aspect 4. The method of claim 1, wherein the foaming occurs by introduction of a physical gas to the blend.

Aspect 5. The method of claim 1, wherein the foaming is via a chemical blowing agent.

Aspect 6. The method of claim 1, wherein the retracting the mold portion in the through-plane direction causes reorientation of the conductive fillers in the through-plane direction.

Aspect 7. The method of claim 1, wherein the mold portion is retracted to a position based on the initial thickness or depth of the mold cavity.

Aspect 8. The method of claim 1, wherein the mold portion is retracted to a position that is between 25% and 200% of the initial depth of the mold cavity.

Aspect 9. The method of claim 1, further comprising a heat-cooling process.

Aspect 10. The method of claim 1, wherein the molded article has a through-plane thermal conductivity of 3-5 W/mK when tested in accordance with ISO 22007-2.

Aspect 11. The method of claim 1, wherein the molded article has a through-plane thermal conductivity of at least 3 W/mK when tested in accordance with ISO 22007-2.

Aspect 12. The method of claim 1, the molded article exhibits a through-plane thermal conductivity of at least two times the through-plane thermal conductivity of a substantially similar molded article formed by a method in the absence of the foaming and the retracting.

Aspect 13. The method of claim 1, wherein the molded article is a heat exchanger.

Aspect 14. A method of forming a polymer composition, the method comprising: combining, to form a blend, from about 5 wt. % to about 99 wt. % of a polymer base resin and from about 15 wt. % to about 70 wt. % of a thermally conductive filler; feeding the blend to a mold cavity of an injection molding machine, wherein the mold cavity has a mold portion that may be retracted in a through-plane direction; foaming the blend to allow a pressure drop; and retracting the mold portion in the through-plane direction to provide the molded article, wherein the combined weight percent value of all components does not exceed 100 wt. %, and all weight percent values are based on the total weight of the composition.

Aspect 15. A method of forming a molded article comprising: combining, to form a blend, a polymer base resin and a thermally conductive filler; injecting the blend to a mold cavity of an injection molding machine, wherein the mold cavity has a mold portion that may be retracted in a through-plane direction; foaming the injected blend to allow a pressure drop; and retracting the mold portion in the through-plane direction to provide the molded article.

While aspects of the present disclosure can be described and claimed in a particular statutory class, such as the system statutory class, this is for convenience only and one of skill in the art will understand that each aspect of the present invention can be described and claimed in any statutory class. Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this disclosure belongs.

As used in the specification and the appended claims, the singular forms "a," "an" and "the" include plural referents unless the context clearly dictates otherwise. Thus, for example, reference to "a polycarbonate" includes mixtures of two or more such polycarbonates. Furthermore, for example, reference to a filler includes mixtures of two or more such fillers.

As used herein, pellet may describe small, compressed mass of a given material such as a polymer. It should be noted that while the term pellets is herein for brevity, other forms of fiber reinforced thermoplastics are contemplated as well. For example, other forms of fiber reinforced thermoplastics may include chopped strands, a mixture of plastic pellets and loose glass fibers or filaments, and the like.

As used herein, through-plane thermal conductivity may refer to the thermal conductivity of the thermoplastic molded product perpendicular to the flow direction during filling of the molded product and/or the thermal conductivity of the thermoplastic molded product in the thickness direction of the molded product.

Ranges can be expressed herein as from "about " one particular value, and/or to "about " another particular value. When such a range is expressed, another aspect includes from the one particular value and/or to the other particular value. Similarly, when values are expressed as approximations, by use of the antecedent "about ," it will be understood that the particular value forms another aspect. A value modified by a term or terms, such as "about " and "substantially," is intended to include the degree of error associated with measurement of the particular quantity based upon the equipment available at the time of filing this application. It will be further understood that the endpoints of each of the ranges are significant both in relation to the other endpoint, and independently of the other endpoint. It is also understood that there are a number of values disclosed herein, and that each value is also herein disclosed as "about " that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" mean that the subsequently described event, condition, component, or circumstance may or may not occur, and that the description includes instances where said event or circumstance occurs and instances where it does not.

Disclosed are component materials to be used to prepare disclosed compositions as well as the compositions themselves to be used within methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

Compounds disclosed herein are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this disclosure belongs.

As used herein, the terms "weight average molecular weight" or "Mw" can be used interchangeably, and are defined by the formula:

$$Mw = \frac{\sum N_i M_i^2}{\sum N_i M_i},$$

where $M_i$ is the molecular weight of a chain and $N_i$ is the number of chains of that molecular weight. Compared to Mn, Mw takes into account the molecular weight of a given chain in determining contributions to the molecular weight average. Thus, the greater the molecular weight of a given chain, the more the chain contributes to the Mw. It is to be understood that as used herein, Mw is measured by gel permeation chromatography. In some cases, Mw can be measured by gel permeation chromatography and calibrated with polycarbonate standards. As an example, a polycarbonate of the present disclosure can have a weight average molecular weight of greater than 5,000 Daltons, or greater than about 5,000 Daltons based on PS standards. As a further example, the polycarbonate can have an Mw of from 20,000 Daltons to 100,000 Daltons, or from about 20,000 to about 100,000 Daltons.

**Claims**

1. A method of forming a molded article comprising:

   combining, to form a blend,

   a polymer base resin and
   a thermally conductive filler;

   feeding the blend to a mold cavity of an injection molding machine, wherein the mold cavity has a mold portion that may be retracted in a through-plane direction; and
   retracting the mold portion in the through-plane direction to allow the foaming process to increase an initial part thickness and to provide the molded article.

2. The method of claim 1, wherein the feeding occurs to fill the mold cavity at least 85% based on total mold cavity volume.

3. The method of claim 1, wherein the foaming is via a physical and/or chemical process.

4. The method of claim 1, wherein the foaming occurs by introduction of a physical gas to the blend.

5. The method of claim 1, wherein the foaming is via a chemical blowing agent.

6. The method of claim 1, wherein the retracting the mold portion in the through-plane direction causes reorientation of the conductive fillers in the through-plane direction.

7. The method of claim 1, wherein the mold portion is retracted to a position based on the initial thickness or depth of the mold cavity.

8. The method of claim 1, wherein the mold portion is retracted to a position that is between 25% and 200% of the initial depth of the mold cavity.

9. The method of claim 1, further comprising a heat-cooling process.

10. The method of claim 1, wherein the molded article has a through-plane thermal conductivity of 3-5 W/mK when tested in accordance with ISO 22007-2.

11. The method of claim 1, wherein the molded article has a through-plane thermal conductivity of at least 1.5 W/mK when tested in accordance with ISO 22007-2.

12. The method of claim 1, wherein the molded article has a through-plane thermal conductivity of at least 3 W/mK when tested in accordance with ISO 22007-2.

13. The method of claim 1, the molded article exhibits a through-plane thermal conductivity of at least two times the through-plane thermal conductivity of a substantially similar molded article formed by a method in the absence of the foaming and the retracting.

14. The method of claim 1, wherein the molded article is a heat exchanger.

15. A method of forming a polymer composition, the method comprising:

   combining, to form a blend,

   from about 5 wt. % to about 99 wt. % of a polymer base resin and
   from about 15 wt. % to about 70 wt. % of a thermally conductive filler;

   feeding the blend to a mold cavity of an injection molding machine, wherein the mold cavity has a mold portion that may be retracted in a through-plane direction;
   foaming the blend to allow a pressure drop; and

retracting the mold portion in the through-plane direction to provide the molded article,
wherein the combined weight percent value of all components does not exceed 100 wt. %, and all weight percent values are based on the total weight of the composition.

16. A method of forming a molded article comprising:

combining, to form a blend,

a polymer base resin and
a thermally conductive filler;

injecting the blend to a mold cavity of an injection molding machine, wherein the mold cavity has a mold portion that may be retracted in a through-plane direction;
foaming the injected blend to allow a pressure drop; and
retracting the mold portion in the through-plane direction to provide the molded article.

100

| 102 - Injection molding of filled thermoplastic resin pellets. |

| 104 - Foaming an injection melt comprising the filled thermoplastic resin pellets. |

| 106 - Allowing a pressure drop to enable nucleation and cell growth with in the system which reorients filler fibers |

| 108 - Opening at least a portion of the mold cavity in through plane-direction to create a larger mold cavity, thereby increasing thickness of molded part |

# FIG. 1

FIG. 2

EP 3 808 525 A1

FIG. 3A

FIG. 3B

FIG. 3C

**FIG. 4**

FIG. 5A

FIG. 5B

FIG. 5C

600

602 - Fiber filled thermoplastics pellets are fed into a hopper.

604 - The fiber filled thermoplastic pellets are fed from
the hopper through an airlock.

606 - The airlock is closed and gas is introduced into the system.

608 - The fiber filled thermoplastic pellets and gas are fed
from the airlock to an injection molding barrel/screw.

610 - During plasticizing, the system is pressurized and gas is
dissolving gradually in the melt.

612 - The mold cavity is placed in a first configuration and filled
to at least about 99% of the volume.

614 – The mold cavity is placed in a second configuration by
retracting a portion of the mold cavity to allow for nucleation and
cell growth.

# FIG. 6

**FIG. 7**

Europäisches
Patentamt

European
Patent Office

Office européen
des brevets

**EUROPEAN SEARCH REPORT**

Application Number

EP 19 20 3079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 013516 A1 (BASF SE [DE]) 15 December 2011 (2011-12-15) <br> * paragraph [0001] - paragraph [0002] * <br> * paragraph [0008] - paragraph [0015] * <br> * paragraph [0023] - paragraph [0027] * <br> * paragraph [0030] - paragraph [0046] * <br> * paragraph [0050] - paragraph [0060] * <br> * paragraph [0071] - paragraph [0079] * <br> * paragraph [0086] * <br> * paragraph [0096] - paragraph [0097] * <br> * figures 1A,1B * | 1-16 | INV. <br> B29C44/08 <br> C08J9/00 <br><br> ADD. <br> B29K105/00 |
| X | US 2007/187859 A1 (KANEKO MITSUHARU [JP] ET AL) 16 August 2007 (2007-08-16) <br> * paragraph [0001] * <br> * paragraph [0020] * <br> * paragraph [0043] - paragraph [0045] * <br> * paragraph [0055] - paragraph [0058] * <br> * paragraph [0087] * <br> * figures 1A-1C * | 1-16 | |
| X | US 2019/118434 A1 (YANEV ANGEL STOYANOV [NL] ET AL) 25 April 2019 (2019-04-25) <br> * paragraph [0001] * <br> * paragraph [0017] - paragraph [0021] * <br> * paragraph [0029] - paragraph [0044] * <br> * figures 1,4,5 * | 1-16 | TECHNICAL FIELDS SEARCHED (IPC) <br><br> B29C <br> C08J <br> B29K |
| A | US 2011/260096 A1 (ATARASHI KENJI [JP]) 27 October 2011 (2011-10-27) <br> * paragraph [0002] * <br> * paragraph [0005] - paragraph [0020] * <br> * paragraph [0025] - paragraph [0029] * <br> * paragraph [0048] - paragraph [0056] * <br> * figures 1-2 * | 1-16 | |

-/--

The present search report has been drawn up for all claims

| Place of search | Date of completion of the search | Examiner |
|---|---|---|
| The Hague | 31 March 2020 | Fageot, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/001460 A1 (TOMIYAMA KOJI [JP] ET AL) 3 January 2013 (2013-01-03)<br>* paragraph [0002] *<br>* paragraph [0011] - paragraph [0018] *<br>* paragraph [0033] - paragraph [0038] *<br>* paragraph [0081] - paragraph [0082] *<br>----- | 1-16 | |

TECHNICAL FIELDS
SEARCHED      (IPC)

The present search report has been drawn up for all claims

| Place of search | Date of completion of the search | Examiner |
|---|---|---|
| The Hague | 31 March 2020 | Fageot, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 19 20 3079

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2020

| Patent document cited in search report | Publication date | Patent family member(s) | | Publication date |
|---|---|---|---|---|
| DE 102011013516 A1 | 15-12-2011 | NONE | | |
| US 2007187859 A1 | 16-08-2007 | EP | 1806217 A1 | 11-07-2007 |
|  |  | JP | 2007210323 A | 23-08-2007 |
|  |  | US | 2007187859 A1 | 16-08-2007 |
| US 2019118434 A1 | 25-04-2019 | CN | 109153161 A | 04-01-2019 |
|  |  | EP | 3445555 A1 | 27-02-2019 |
|  |  | US | 2019118434 A1 | 25-04-2019 |
|  |  | WO | 2017182913 A1 | 26-10-2017 |
| US 2011260096 A1 | 27-10-2011 | CN | 102234443 A | 09-11-2011 |
|  |  | DE | 102011008465 A1 | 27-10-2011 |
|  |  | JP | 2011241375 A | 01-12-2011 |
|  |  | US | 2011260096 A1 | 27-10-2011 |
| US 2013001460 A1 | 03-01-2013 | CN | 102341225 A | 01-02-2012 |
|  |  | DE | 112011100007 T5 | 28-06-2012 |
|  |  | US | 2013001460 A1 | 03-01-2013 |
|  |  | WO | 2011122441 A1 | 06-10-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. AMELI et al.** *CARBON,* 2014, vol. 71, 206-217